# EUROPÄISCHE PATENTSCHRIFT

(11) **EP 2 931 678 B1**
(45) Veröffentlichungstag und Bekanntmachung des Hinweises auf die Patenterteilung: **05.10.2016**
(21) Anmeldenummer: 13820721.2
(22) Anmeldetag: 11.12.2013
(51) Int. Cl.: C04B 28/06, C04B 7/32

(54) **KLINKERERSATZ**
CLINKER SUBSTITUTE
SUBSTITUT DE CLINKER

(30) Priorität: 12.12.2012 AT 505802012
(43) Veröffentlichungstag der Anmeldung: 21.10.2015
(73) Patentinhaber: Novak, Denes, 2753 Markt Piesting (AT); Novak, Edith, 2753 Markt Piesting (AT); Baumit Beteiligungen GmbH, 2754 Waldegg (AT)
(72) Erfinder: NOVAK, Denes, A-2753 Markt Piesting (AT); NOVAK, Edith, A-2753 Markt Piesting (AT)
(74) Vertreter: Müllner, Martin
(86) Internationale Anmeldenummer: PCT/AT2013/050244
(87) Internationale Veröffentlichungsnummer: WO 2014/089592

(56) Entgegenhaltungen:
- WO-A1-2010/070214
- WO-A1-2011/000972
- FR-A1- 2 873 366
- GB-A- 930 368

## Beschreibung

### Technisches Gebiet

Die vorliegende Erfindung betrifft einen hydraulisch wirksamen Klinkerersatz, der folgende Zusammensetzung aufweist:
CaO: 31-48 %, vorzugsweise 38-46 %
SiO₂: 25-40 %
Al₂O₃:13-24 %.

### Stand der Technik

Portlandzement ist heute weit verbreitet. Es ist bekannt, dass die Herstellung von Portlandzement sehr energieaufwändig ist.

Portlandzement zeichnet sich dadurch aus, dass der CaO-Gehalt sehr hoch ist, nämlich typisch 66 Masse-%. Durch den hohen CaO-Gehalt entstehen bei der Hydratation von Portlandzement höhere kalkhaltige Mineralphasen, wie Tricalciumsilikat, Dicalciumsilikat, und Tricalciumaluminat, die auch in der Anfangsphase der Erhärtung nach ein bis zwei Tagen entsprechend hohe Festigkeiten ergeben. Bei der Herstellung von Portlandzementklinker entsteht wegen des hohen Anteils an CaO jedoch sehr viel CO2, zum Teil chemisch durch die Umwandlung von Kalk in gebrannten Kalk, zum Teil durch den Energiebedarf. Dies ist bei der derzeitigen Problematik des Treibhauseffekts unerwünscht.

Abhilfe kann geschaffen werden, wenn man den hohen CaO-Anteil beim Klinkerbrennen reduziert. Der verminderte CaO-Anteil bewirkt einerseits eine beachtliche Energieeinsparung durch den Wegfall der energieintensiven Zerspaltung von CaCO3 und andererseits verringert er deutlich die CO₂-Emission. Zu diesen bedeutenden ökologischen und ökonomischen Vorteilen kommt hinzu, dass durch den reduzierten Kalksteinanteil eine Primärrohstoffeinsparung erzielt wird.

Bei einer Reduktion des CaO-Anteils ohne weitere Maßnahmen ergibt sich allerdings das Problem, dass die Frühfestigkeiten stark reduziert sind, sodass der Baufortschritt bei Verwendung eines derartigen Zements zumindest bei manchen Bauvorhaben zu gering wird.

So wurde in der WO WO 2011/000972 --. vorgeschlagen, folgenden Klinkerersatz zu Portlandzement zuzusetzen:
CaO: 31-46%, vorzugsweise 31-43%
SiO₂:31-40%
Al₂O₃: 13-24%

Wie aus Tabelle 2 dieser Schrift hervorgeht, sinken die Frühfestigkeiten durch die Zugabe dieses Klinkerersatzes zu Portlandzement stark ab, verglichen mit reinem Portlandzement. Dieser Effekt steigert sich noch erheblich bei höheren Anteilen an Klinkerersatz.

Durch den niedrigen CaO-Anteil gegenüber dem Portlandzementklinker können keine höheren kalkhaltigen Mineralphasen, wie Trikalciumsilikat, Dicalciumsilikat und Tricalciumaluminat entstehen. Statt dieser Mineralphasen entstehen im gebrannten Klinkerersatz Monosilikat- und Monoaluminatphasen, die bekanntlich eine starke Nacherhärtung und damit ausgezeichnete Langzeitfestigkeiten aufweisen, aber durch die langsamere Erhärtung niedrigere Frühfestigkeiten verursachen, ähnlich wie es bei den Zementen mit natürlichen und künstlichen Puzzolanen, Flugaschen und Hüttensanden bekannt ist.

### Darstellung der Erfindung

Die Aufgabe der vorliegenden Erfindung ist es, die Frühfestigkeiten vom Klinkerersatz zu erhöhen.

Diese Aufgabe wird erfindungsgemäß dadurch gelöst, dass der gebrannte Klinkerersatz mindestens 1 %, vorzugsweise 3-14 % SO₃ als Sulfat, das bei der Herstellung des Klinkerersatzes mitgebrannt wird, enthält.

Der gebrannte Klinkerersatz enthält gegenüber dem Portlandzementklinker einen höheren Prozentsatz an Silizium- und Aluminiumverbindungen (Tabelle 1). Diese kommen vielfach in günstigen Sekundärrohstoffen bzw. Abfallstoffen, wie z. B. in gering reaktiven Flugaschen, Betonabbruch, Ziegelsplitt, Gießereisand usw. vor. Dadurch können beim Brand vom Klinkerersatz wesentlich höhere Mengen eingesetzt werden als beim Portlandzementklinkerbrand. Durch den Einsatz dieser Sekundärrohstoffe werden die Rohstoffkosten beachtlich gesenkt. Zusätzlich ergibt sich ein wichtiger Beitrag zur Schonung der Primärrohstoff-Reserven.

[Tabellen0001]

**Tabelle 1**

| | **Portlandzementklinker** | **Klinkerersatz** |
|---|---|---|
| CaO in % | 66 | 31-48 |
| SiO₂ in % | 21 | 25-40 |
| Al₂O₃ in % | 6 | 13-24 |

Im Rahmen der Versuche der vorliegenden Erfindung wurde herausgefunden, dass der Gehalt an SO₃ im Klinkerersatz einen entscheidenden Einfluss auf die Frühfestigkeiten hat, wie an Hand der Beispiele ersichtlich gemacht wird. Wichtig ist, dass der Sulfat im Klinkerersatz vorhanden ist, also bei der Herstellung des Klinkerersatzes mitgebrannt wird. Eine nachträgliche Zugabe, wie sie zur Abbindeverzögerung üblich ist, hat diese Wirkung nicht.

Die zweite Möglichkeit, die Frühfestigkeiten zu erhöhen, ist eine entsprechende Feinmahlung des Klinkerersatzes.

Besonders vorteilhaft ist, dass sich der erfindungsgemäße Klinkerersatz sehr leicht mahlen lässt. Man kann eine Feinheit von über 6.000 cm²/g Blaine mit weniger Energieaufwand und in kürzerer Zeit erzielen als eine Feinheit von 4.500 cm²/g Blaine beim Portlandzementklinker.

Die Feinheit vom Klinkerersatz sollte daher mindestens 6.000 cm²/g Blaine erreichen, vorzugsweise über 7.000 cm²/g Blaine liegen.

### Weg(e) zur Ausführung der Erfindung

Anhand der folgenden Beispiele wird die Erfindung näher erläutert.

In Tabelle 2 sind die Zusammensetzung des Klinkerersatzes, insbesondere die SO₃ - Gehalte im Klinkerersatz, und die erzielten Druckfestigkeiten von drei Beispielen angegeben. Beispiel 1 ist ein Vergleichsbeispiel, die Beispiele 2 und 3 sind erfindungsgemäß.

Für die Ermittlung der Druckfestigkeiten wurden zu 75 % Portlandzementklinker jeweils 25 % Klinkerersatz mit einer Feinheit von 6.000cm²/g Blaine zugegeben.

[Tabellen0002]

**Tabelle 2**

| Analyse | Beispiel 1 | Beispiel 2 | Beispiel 3 |
|---|---|---|---|
| SiO₂ | 31,1 | 30,2 | 30,0 |
| Al₂O₃ | 16 | 14,7 | 16,7 |
| Fe₂O₃ | 2,9 | 3,7 | 3,5 |
| CaO | 43,6 | 44,8 | 43,4 |
| MgO | 2,5 | 1,8 | 1,9 |
| K₂O | 0,1 | 0,3 | 0,3 |
| TiO₂ | 1 | 0,69 | 0,53 |
| SO₃ | 0,7 | 1,7 | 3,8 |
| Druckfestig-keite n N/mm² | | | |
| n1T | 10,2 | 11,8 | 15,1 |
| n2T | 20,7 | 23,2 | 26,9 |
| n7T | 36,6 | 38,6 | 40,0 |
| n28T | 47,5 | 49,7 | 48,1 |

Man sieht deutlich, dass die Frühfestigkeit, nicht jedoch die Endfestigkeit mit steigendem Sulfat-Gehalt im Klinkerersatz stark steigt.

Um den Einfluss der Feinheit und des Anteils zu demonstrieren, wurde der Klinkerersatz gemäß Beispiel 2 in verschiedenen Anteilen und mit verschiedenen Feinheiten zum Portlandzementklinker zugesetzt.

Die Ergebnisse sind in Tabelle 3 dargestellt.

[Tabellen0003]

**Tabelle 3**

| | | | | |
|---|---|---|---|---|
| **Feinheit Klinkerersatz Blaine cm²/g** | **6.000** | | **7.100** | |
| **Anteil Portlandzementklinker in %** | **75** | **60** | **75** | **60** |
| **Anteil Klinkerersatz in %** | **25** | **40** | **25** | **40** |
| Druckfestigkeiten N/mm² | | | | |
| n1T | 11,8 | 8,1 | 13,9 | 10,6 |
| n2T | 23,2 | 16,6 | 25,1 | 20,1 |
| n7T | 38,6 | 28,1 | 38,9 | 32,1 |
| n28T | 49,7 | 42,4 | 50,7 | 44,2 |
| n56T | 56,5 | 49,2 | | |
| n90T | 59,3 | 55,5 | | |

Man erkennt, dass eine Erhöhung des Anteiles an Klinkerersatz die Festigkeitswerte generell verschlechtert, dass aber eine höhere Feinheit des Klinkerersatzes die Frühfestigkeit deutlich erhöht.

Unter Berücksichtigung der beschriebenen Verbesserungsmaßnahmen wurden Druckfestigkeitsprüfungen (gemäß EN 196-1) des Klinkerersatzes gemäß Beispiel 3 mit verschiedenen prozentuellen Zusätzen zu Portlandzementklinker angesetzt. Tabelle 4 enthält die erzielten Festigkeiten.

[Tabelle0004]

**Tabelle 4**

| | | | | |
|---|---|---|---|---|
| **Portlandzement-kl inker in %** | **75** | **60** | **50** | **40** |
| **Klinkerersatz in %** | **25** | **40** | **50** | **40** |
| **AHWZ* in %** | **-** | **-** | **-** | **20** |
| Druckfestigkeiten N/mm² | | | | |
| n1T | 15,1 | 12,8 | 8,1 | 5,4 |
| n2T | 26,9 | 21,7 | 15,8 | 12,8 |
| n7T | 40,0 | 31,4 | 26,0 | 24,0 |
| n28T | 48,1 | 44,5 | 37,5 | 40,7 |

| | | | | |
|---|---|---|---|---|
| * AHWZ="Aufbereitete hydraulisch wirksame Zusatzstoffe" für die Betonherstellung, bestehend aus Hüttensand, Flugasche und Kalksteinmehl gemäß ÖNORM B3309 | | | | |

Der günstige Einfluss des Klinkerersatzes auf die Entwicklung der Frühfestigkeiten der Zemente ist deutlich zu erkennen, da sogar mit 50 % Zusatz für eine breite Betonanwendung zufriedenstellende Druckfestigkeiten erreicht wurden.

Tabelle 5 stellt einen Vergleich mit den Zementen CEMII/A-L, CEMII/B-M und Zementen mit 25% und 40% Klinkerersatz dar.

[Tabellen0005]

**Tabelle 5**

| **Rezeptur** | **CEMII/A-L** | **Klinkerersatz** | **CEMII/B-M** | **Klinkerersatz** |
|---|---|---|---|---|
| Klinker in % | 80 | 75 | 65 | 60 |
| Klinker-ersatz in % | | 25 | | 40 |
| Kalkstein in % | 20 | | | |
| AHWZ*^{*} in % | | | 35 | |
| Druck-festigk eiten | | | | |
| N/mm² n1T | 11,5 | 15,1 | 7,8 | 12,8 |
| n2T | 24,8 | 26,9 | 16,8 | 21,7 |
| n7T | 42,5 | 40,0 | 30,0 | 31,4 |
| n28T | 54,5 | 48,1 | 41,0 | 44,5 |

Trotz höherer Dosierung vom Klinkerersatz wurden deutlich höhere Frühfestigkeiten erreicht als bei den Zementen mit den üblichen Zumahlstoffen.

Die Frühfestigkeit verringert die Austrocknungsgefahr, wodurch der Nachbehandlungsbedarf günstig beeinflusst wird.

Die Nachhaltigkeit von Betonbauten wird durch den Einsatz von Zementen mit dem erfindungsgemäßen Klinkerersatz besonders gesteigert. Einerseits bewirken durch den niedrigen CaO-Gehalt entstehende Monocalciumsilikate und Monocalciumaluminate eine starke Nacherhärtung und ein dichtes Betongefüge und andererseits ergibt die höhere Feinheit des Klinkerersatzes eine hohe Packungsdichte und damit einen undurchlässigen, dichten Betonmit langer Lebensdauer.

Darüber hinaus entsteht bei der Bildung dieser Mineralphasen deutlich weniger Wärme, wodurch auch das Risiko der Rissbildungstark reduziert wird.

Infolge des verminderten Tricalciumaluminatanteils wird auch der Sulfatwiderstand verbessert.

Untersuchungen haben ebenfalls bestätigt, dass der Beton mit einem Zement mit Klinkerersatz frost- und tausalzbeständig ist.

Auf Grund dieser Eigenschaften kann mit dem Zement mit Klinkerersatz ein breites Anwendungsgebiet abgedeckt werden.

Ein weiterer Vorteil des Klinkerersatzes besteht darin, dass bei seiner Herstellung wesentlich weniger Kohlendioxid entsteht und deutlich weniger Energie für das Brennen benötigt wird (wie dies aus der WO 2011/000972 bereits bekannt ist). Durch den stark reduzierten Kalksteinanteil wird um 40-60% weniger Kohlendioxid erzeugt als bei Portlandzementklinker. Dabei wird der CO₂-Ausstoß einerseits prozessbedingt (es entsteht beim Brennen von CaCO3weniger CO₂) und andererseits wegen des geringeren Energiebedarfs (für das Zersetzen von CaCO3wird viel Energie benötigt) stark reduziert.

Besonders günstig ist weiters, dass die Brenntemperatur niedriger als üblich ist, sodass auch deswegen mit weniger Brennstoff das Auslangen gefunden wird und die Feuerraumbelastung der Brennöfen gesenkt werden kann. Üblicherweise wird Portlandzementklinker bei 1.380°C gebrannt, der erfindungsgemäße Klinkerersatz kann jedoch bei rd. 1.200°C gebrannt werden. Zu erwähnen ist noch, dass der erfindungsgemäße Klinkerersatz auf herkömmlichen Zementanlagen hergestellt werden kann, sodass keine größeren Investitionen zu dessen Herstellung notwendig sind.

Um diese Vorteile zu belegen, wurden Versuchsbrände mit Portlandzementklinker und mit dem erfindungsgemäßen Klinkerersatz durchgeführt. Dabei wurden 10 terfindungsgemäßer Klinkerersatz und 8,4 t Portlandzementklinker gebrannt. In Tabelle 6 sind die Daten der Versuche zusammengestellt.

[Tabellen0006]

**Tabelle 6**

| | **Portland-zemen tklinker** | **Klinker-ersat z** | **Einspa-run g** |
|---|---|---|---|
| Rohmehlaufgabe | 593 kg/h | 647 kg/h | |
| Erdgas | **90 Bm³/h** | **45 Bm³/h** | 50% |
| Temperatur vor Filter | 117°C | 87°C | |
| Temperatur Ofeneinlauf | 814°C | 468°C | |
| Temperatur Sinterzone | 1.394°C | 1.202°C | |
| O₂-Gehalt | 1,6% | 2,6% | |
| CaO-frei | 0,63% | 0,34% | |

Trotz rund 9 % höherer Leistung konnte der Erdgasbedarf auf die Hälfte gesenkt werden. Dies ergibt insgesamt eine Energieeinsparung von über 50 %. Dadurch reduziert sich auch entsprechend die CO2-Emission.

Der Brand verlief durch die niedrigere Feuerraumbelastung ohne stärkere Ansatzbildung störungsfrei. Der erbrannte Klinkerersatz hat gleichmäßige Qualität und weist eine wesentlich leichtere Mahlbarkeit auf als der Portlandzementklinker.

Zusammengefasst ergeben sich also folgende Vorteile:
- Die aufgezählten positiven Eigenschaften der Zemente mit Klinkerersatz ermöglichen ein breites Anwendungsgebiet mit deutlicher Verbesserung der Nachhaltigkeit.
- Auf Grund der aktuellen Preissituation für Roh- und Zumahlstoffe sowie für Energieträger ergibt die Zugabe des erfindungsgemäßen Klinkerersatzes beachtliche Kostenersparnisse.
- Deutliche Senkung des Energiebedarfs und des CO₂-Ausstoßes
- Schonung von Primärrohstoffen (vor allem Kalkstein) durch die breite Rohstoffauswahl und erweiterte Einsatzmöglichkeit von Produkten, die sonst teilweise verhaldet und entsorgt werden müssen (z.B. Flugaschen, Gießereisand usw.).
- Gleichmäßige Produktqualität durch die Steuerung der Rohstoffeinstellung und des Brennprozesses.
- Unbegrenzte Produktionsmöglichkeit und dadurch bessere Verhandlungsposition bezüglich der üblichen Zumahlstoffe, vor allem Schlacke.
- Besondere Bedeutung in Ländern, wo keine, zu wenige oder zu teure Zumahlstoffe zur Verfügung stehen.

## Patentansprüche

1. Klinkerersatz, der folgende Zusammensetzung aufweist:
CaO: 31-48 %, vorzugsweise 38-46 %
SiO₂: 25-40 %
Al₂O₃: 13-24 %,
**dadurch gekennzeichnet, dass** er zusätzlich mindestens 1 %, vorzugsweise 3-14 % SO₃ als Sulfat, das bei der Herstellung des Klinkerersatzes mitgebrannt wird, enthält.

2. Klinkerersatz nach Anspruch 1, **dadurch gekennzeichnet, dass** er eine Feinheit von mindestens 6.000 cm²/g Blaine, vorzugsweise mindestens 7.000 cm²/g Blaine aufweist.

3. Zement, der den Klinkerersatz nach Anspruch 1 oder 2 in einem Anteil von 20-60 % enthält.

## Claims

1. A clinker substitute which has the following composition:
CaO: 31-48%, preferably 38-46%
SiO₂: 25-40%
Al₂O₃: 13-24%,
**characterised in that** it contains in addition at least 1%, preferably 3-14%, SO₃ as sulphate, which is burnt as well during the production of the clinker substitute.

2. A clinker substitute according to claim 1, **characterised in that** it has a fineness of at least 6,000 cm²/g Blaine, preferably at least 7,000 cm²/g Blaine.

3. A cement which contains the clinker substitute according to claim 1 or 2 in a proportion of 20-60%.

## Revendications

1. Substitut de clinker, ayant la composition suivante :
CaO : 31 à 48 %, de préférence 38 à 46 %
SO₂ : 25 à 40 %
Al₂O₃ : 13 à 24 %,
**caractérisé en ce qu'**il contient en outre au moins 1 %, de préférence 3 à 14 %, de SO₃ qui se présente sous forme de sulfate et qui est incorporé avant la cuisson lorsque ledit substitut de clinker est fabriqué.

2. Substitut de clinker selon la revendication 1, **caractérisé en ce qu'**il présente une finesse Blaine d'au moins 6000 cm²/g, celle-ci étant préférentiellement d'au moins 7000 cm²/g_{.}

3. Ciment contenant le substitut de clinker selon les revendications 1 ou 2 dans une proportion de 20 à 60 %.
